# EUROPÄISCHE PATENTSCHRIFT

(11) **EP 1 020 063 B1**
(45) Veröffentlichungstag und Bekanntmachung des Hinweises auf die Patenterteilung: **02.05.2003**
(21) Anmeldenummer: 98956796.1
(22) Anmeldetag: 22.09.1998
(51) Int. Cl.: H04M 1/72, H04M 1/65

(54) **INTEGRIERTER SCHALTKREIS FÜR EIN MOBILES FUNKGERÄT MIT ANRUFBEANTWORTERFUNKTION**
INTEGRATED CIRCUIT FOR A MOBILE RADIO TELEPHONE WITH AN ANSWERPHONE FUNCTION
CIRCUIT DE COMMUTATION INTEGRE POUR APPAREIL RADIO MOBILE POSSEDANT UNE FONCTION DE REPONDEUR TELEPHONIQUE

(30) Priorität: 29.09.1997 DE 29717372 U
(43) Veröffentlichungstag der Anmeldung: 19.07.2000
(73) Patentinhaber: SIEMENS AKTIENGESELLSCHAFT, 80333 München (DE)
(72) Erfinder: WEWERS, Otger, D-46395 Bocholt (DE)
(86) Internationale Anmeldenummer: DE9802837
(87) Internationale Veröffentlichungsnummer: WO99017516

(56) Entgegenhaltungen:
- EP-A- 0 664 632
- WO-A-97/14222
- DE-A- 19 535 612
- US-A- 5 335 276
- US-A- 5 630 205

## Beschreibung

Die Erfindung betrifft einen integrierten Schaltkreis gemäß dem Oberbegriff des Patentanspruchs 1, sowie ein mobiles Funkgerät gemäß dem Oberbegriff des Patentanspruchs 2.

Ein solcher Schaltkreis ist beispielsweise in der Funkschau 3/1994, Seiten 72 bis 75 in dem Artikel "Bauelemente für DECT, So wird das Schnurlose Digital" von Stephan Althammer und Dieter Brückmann beschrieben. Dieser Schaltkreis wird vorzugsweise in einer DECT-Mobilstation beziehungsweise in einem DECT-Komfort-Mobilteil eingesetzt.

Der Käufer eines solchen Komfort-Mobilteils muß beim Kauf entscheiden, ob er ein solches Mobilteil mit oder ohne Anrufbeantworterfunktion haben will. Eine spätere Nachrüstmöglichkeit der Anrufbeantworter-Funktionalität in ein Mobilteil ist nicht möglich. Der Bedarf an einen Anrufbeantworter kann dann entweder durch den Kauf eines neuen, mit einer solchen Funktion ausgestatteten Mobilteils, oder durch die Parallelschaltung eines herkömmlichen Anrufbeantworters zu der DECT-Basisstation über die TAE-Dose befriedigt werden.

Der Erfindung liegt die Aufgabe zugrunde, einen integrierten Schaltkreis sowie ein mobiles Funkgerät der eingangs genannten Art anzugeben, durch den beziehungsweise das eine spätere Nachrüstung der Anrufbeantworter-Funktionalität ermöglicht wird.

Diese Aufgabe wird erfindungsgemäß für einen integrierten Schaltkreis durch die im Patentanspruch 1, und für ein mobiles Funkgerät durch die im Patentanspruch 2 angegebenen Merkmale gelöst.

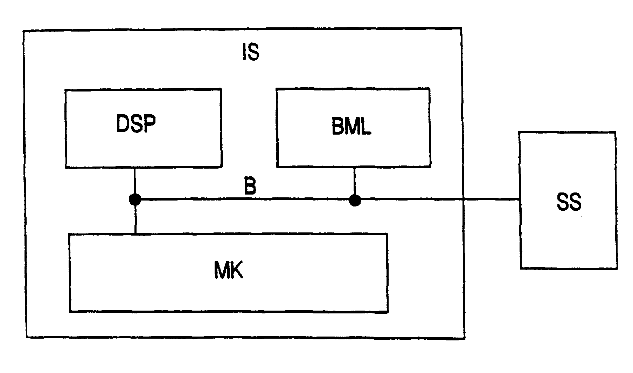

Im folgenden wird die Erfindung anhand eines in der Zeichnung dargestellten Ausführungsbeispieles beschrieben.

In der einzigen Figur ist ein integrierter Schaltkreis IS dargestellt. Der integrierte Schaltkreis IS weist beispielsweise einen digitalen Signalprozessor DSP, einen Mikrocontroller MK sowie eine Burst-Mode-Logik BML auf, die über ein internes Bussystem B miteinander verbunden sind. Dieser integrierte Schaltkreis IS ist beispielsweise für den Einsatz in einem Kleinzellen-Funknetz nach dem DECT-Standard ausgebildet.

Bei einer davon abweichenden Ausgestaltung kann der integrierte Schaltkreis IS für ein Mobilfunkgerät zur Anbindung an ein zellulares Funknetz, beispielsweise nach dem GSM-Standard, ausgebildet sein.

Erfindungsgemäß weist der integrierte Schaltkreis IS eine Schnittstelle zu einem Sprachspeicher SS auf. Dieser Sprachspeicher SS ist vorzugsweise am internen Bussystem B des integrierten Schaltkreises IS angeschaltet. Weiter ist im Mikrocontroller MK die entpsrechende Software hinterlegt, so daß der integrierte Schaltkreis IS die Anrufbeantworter-Funktionalität, in Verbindung mit dem Sprachspeicher SS, aufweist.

Ein Mobilfunkgerät zur Anbindung an ein zellulares Mobilfunknetz, das diesen integrierten Schaltkreis IS sowie einen Steckplatz zur nachträglichen Aufnahme des Sprachspeichers SS aufweist, kann also mit geringem Aufwand nachträglich mit der Anrufbeantworter-Funktionalität aufgerüstet werden. Ein solches Mobilfunkgerät erfüllt auch die Funktion eines Diktiergerätes und ergänzt sie weiter.

## Patentansprüche

1. Integrierter Schaltkreis (IS) mit einem Mikrocontroller (MK), einem funkzellenspezifischen Logikbaustein (BML) und einem digitalen Signalprozessor (DSP) zur digitalen Sprachbearbeitung in einem Kommunikationsendgerät **gekennzeichnet durch**
eine Schnittstelle zu einem digitalen Sprachspeicher (SS), **durch** den zusammen mit dem Mikrocontroller (MK) eine Anrufbeantworter-Funktionalität realisiert ist.

2. Mobiles Funkgerät zur drahtlosen Anbindung an ein zellulares Funknetz, insbesondere an ein Funknetz nach dem DECT-Standard,
mit einem integrierten Schaltkreis (IS), der einen Mikrocontrolier (MK), einen funkzellenspezifischen Logikbaustein (BML) und einen digitalen Signalprozessor (DSP) zur digitalen Sprachbearbeitung aufweist,
**dadurch gekennzeichnet**
**daß** der integrierte Schaltkreis (IS) eine Schnittstelle zu einem digitalen Sprachspeicher (SS) aufweist, und daß für den Sprachspeicher (SS) eine mit dem integrierten Schaltkreis (IS) verbundene Aufnahmevorrichtung vorgesehen ist.

## Claims

1. Integrated circuit (IS) having a microcontroller (MK), a radio-cell-specific logic chip (BML) and a digital signal processor (DSP) for digital voice processing in a communications terminal,
**characterized by**
an interface to a digital voice memory (SS) which, together with the microcontroller (MK), provides an answering machine function.

2. Mobile radio for wireless connection to a cellular radio network, in particular to a radio network based on the DECT standard,
having an integrated circuit (IS) which has a microcontroller (MK), a radio-cell-specific logic chip (BML) and a digital signal processor (DSP) for digital voice processing,
**characterized**
**in that** the integrated circuit (IS) has an interface to a digital voice memory (SS), and
**in that** a holding apparatus connected to the integrated circuit (IS) is provided for the voice memory (SS).

## Revendications

1. Circuit de commutation intégré (IS), comportant un microcontrôleur (MK), un composant logique (BML), spécifique aux cellules radio, et un processeur numérique de signaux (DSP), destiné au traitement numérique de la parole dans un appareil terminal de communication
**caractérisé par**
une interface vers une boîte à lettres vocale numérique (SS), grâce à laquelle est réalisée, en commun avec le microcontrôleur (MK), une fonctionnalité de répondeur téléphonique.

2. Appareil de radio mobile destiné à l'intégration sans fil dans un réseau de radio cellulaire, en particulier dans un réseau radio selon la norme DECT,
ayant un circuit de commutation intégré (IS), qui comporte un microcontrôleur (MK), un composant logique (BML), spécifique aux cellules radio, et un processeur numérique de signaux (DSP), destiné au traitement numérique de la parole,
**caractérisé par le fait**
**que** le circuit de commutation intégré (IS) comporte une interface vers une boîte à lettres vocale numérique (SS) et
**qu'**il est prévu, pour la boîte à lettres vocale (SS), un dispositif de montage relié au circuit de commutation intégré (IS).
